# EUROPEAN PATENT SPECIFICATION

(11) **EP 3 517 437 B1**
(45) Date of publication and mention of the grant of the patent: **27.05.2020**
(21) Application number: 18214432.9
(22) Date of filing: 20.12.2018
(51) Int. Cl.: B64D 13/02

(54) **CABIN BLOWER SYSTEM**
KABINENGEBLÄSESYSTEM
SYSTÈME DE VENTILATEUR DE CABINE

(30) Priority: 26.01.2018 GB 201801300
(43) Date of publication of application: 31.07.2019
(73) Proprietor: Rolls-Royce plc, London N1 9FX (GB)
(72) Inventor: Sharpe, Richard, Derby, Derbyshire DE24 8BJ (GB); Knight, Glenn, Derby, Derbyshire DE24 8BJ (GB)
(74) Representative: Rolls-Royce plc

(56) References cited:
- EP-A1- 3 034 405
- US-A1- 2015 275 769
- US-A1- 2016 167 790
- US-A1- 2017 113 808

## Description

The present disclosure concerns cabin blower systems. More specifically the disclosure concerns cabin blower systems with variable gear ratios and variable geometry compressors. The disclosure also concerns aircraft having cabin blower systems and methods of operating cabin blower systems.

Cabin blower systems are used to pressurise the cabins of aircraft. Cabin blowers are typically driven by one or more associated gas turbine engines of the aircraft. The gas turbine engine may be used to drive a cabin blower compressor in a number of ways (e.g. using electrical power generated by the engine or mechanically). Where mechanical driving of the compressor is employed, drive is typically taken from a shaft of the gas turbine engine via an accessory gearbox. A means of varying the speed of the drive delivered to the compressor is also required; it is not desirable for the cabin air flow and pressure to be determined by the particular operating point of the gas turbine at any particular moment. Therefore a gearing mechanism such as a continuously variable transmission is also provided in the drive path between the accessory gearbox and compressor. This system ensures that regardless of engine operating point and ambient air pressure the cabin flow and pressure can be maintained within acceptable limits.

Document EP3034405 discloses a cabin blower system comprising a variable geometry cabin blower compressor and a continuously variable toroidal transmission.

Known compressors in cabin blower systems may be unable to produce certain combinations of temperature, pressure, and flow that are required by the aircraft to which they are attached. Running the cabin blower system at a higher speed can mitigate this issue but may in itself result in 'oversupply' to the aircraft and resultant wasted energy due to the use of a flow- or pressure-reducing valve.

According to a first aspect, there is provided an aircraft cabin blower system comprising: a transmission for receiving mechanical power from a gas turbine engine; and a cabin blower compressor, an output of the transmission being configured to drive the cabin blower compressor; wherein the transmission has a variable gear ratio and the cabin blower compressor has a variable geometry, and wherein variation of the gear ratio and the geometry provides a variable output of the cabin blower compressor, characterised in that the transmission includes a plurality of fixed gears, selectively engageable to provide a plurality of discrete gear ratios.

The output of the cabin blower can therefore be varied through adjustment of the transmission and the geometry of the cabin blower compressor. Thus, the output can be set to a level required by the aircraft, at any point. By having variability in both the transmission and the geometry of the cabin blower compressor, not only can a highly variable output be enabled even with a transmission with discrete gear ratios, but adjustments can be made to ensure efficient operation of the system.

Altering the geometry of the cabin blower compressor increases its flow range. A combination of changing the output of the transmission - leading to a change in the speed of the cabin blower compressor - and the compressor geometry enables the flow and pressure of air delivered by the cabin blower compressor to be optimised for any given speed of the gas turbine engine. An optimum speed/displacement combination can maximise efficiency of the system. Use of a variator, which is well-known to the person skilled in the art, can be avoided. Such variators can be expensive, heavy, and/or unreliable.

The transmission includes a plurality of fixed gears, selectively engageable to provide a plurality of discrete gear ratios. The discrete gear ratios result in the speed of the compressor being at an at least approximately appropriate value based on nominal cabin blower compressor geometry.

The transmission may be configured to receive mechanical power from an accessory gearbox of the gas turbine engine.

The accessory gearbox may be driven by a compressor or shaft of the gas turbine engine. The compressor may be an intermediate-pressure compressor or a high-pressure compressor. The shaft may be a low-pressure shaft, an intermediate-pressure shaft, or a high-pressure shaft of the gas turbine engine.

The transmission and the cabin blower compressor may be capable of being configured in a starter mode to provide mechanical power to the gas turbine engine to facilitate starting of the gas turbine engine.

The variability of the transmission and geometry of the cabin blower compressor can therefore be used to optimise the rotation of the gas turbine engine, in order to provide the required conditions for starting or ignition of the gas turbine engine.

According to a second aspect, there is provided an aircraft comprising an aircraft blower system in accordance with the first aspect.

According to a third aspect, there is provided a method of operating an aircraft cabin blower system, the method comprising the steps of: varying a gear ratio of a transmission of the cabin blower system that provides mechanical power from a gas turbine engine to a cabin blower compressor of the cabin blower system; and varying a geometry of the cabin blower compressor; wherein varying the gear ratio of the transmission and varying the geometry of the cabin blower compressor provide a desired output of the cabin blower compressor, characterised in that the step of varying the gear ratio comprises selecting a discrete gear ratio from a plurality of discrete gear ratios of the transmission.

The discrete gear ratio results in the speed of the compressor being at an at least approximately appropriate value based on nominal cabin blower compressor geometry.

The method may further comprise the step of transmitting power from an accessory gearbox of the gas turbine engine to the transmission. The accessory gearbox may be driven from a compressor of the gas turbine engine, for example the intermediate-pressure compressor.

The method may further comprise the steps of: in a starter mode, operating the transmission and cabin blower compressor to provide mechanical power to the gas turbine engine to facilitate starting of the gas turbine engine.

The variability of the transmission and geometry of the cabin blower compressor can therefore be used to optimise the rotation of the gas turbine engine, in order to provide the required conditions for starting or ignition of the gas turbine engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic depiction of an aircraft cabin blower system in accordance with an embodiment of the disclosure;
**Figure 3** is a plan view of an aircraft including a cabin blower system in accordance with the present disclosure; and
**Figure 4** is a schematic depiction of an aircraft cabin blower system which is not an embodiment of the invention but which is useful for understanding the invention.

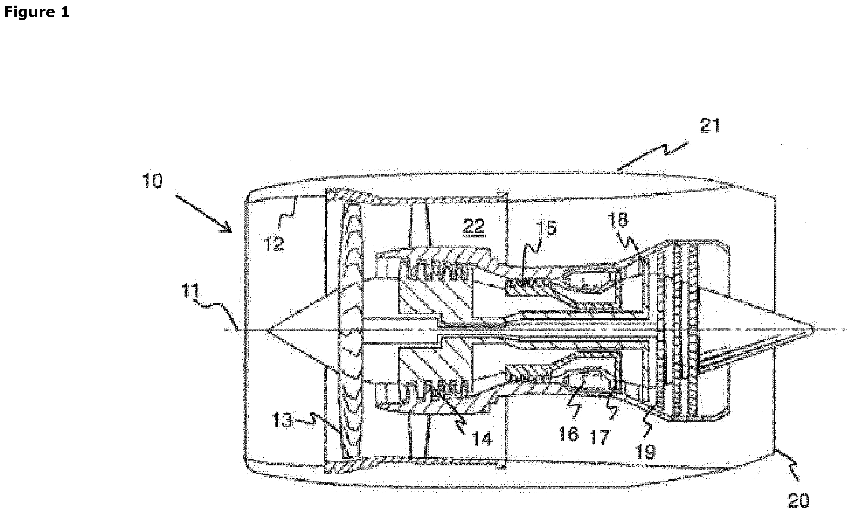

With reference to Figure 1, a gas turbine engine is generally indicated at 10, having a principal and rotational axis 11. The engine 10 comprises, in axial flow series, an air intake 12, a propulsive fan 13, an intermediate-pressure compressor 14, a high-pressure compressor 15, combustion equipment 16, a high-pressure turbine 17, an intermediate-pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate-pressure compressor 14 and a second air flow which passes through a bypass duct 22 to provide propulsive thrust. The intermediate-pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high-, intermediate- and low-pressure turbines 17, 18, 19 before being exhausted through the nozzle 20 to provide additional propulsive thrust. The high- 17, intermediate- 18 and low- 19 pressure turbines drive respectively the high-pressure compressor 15, intermediate-pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

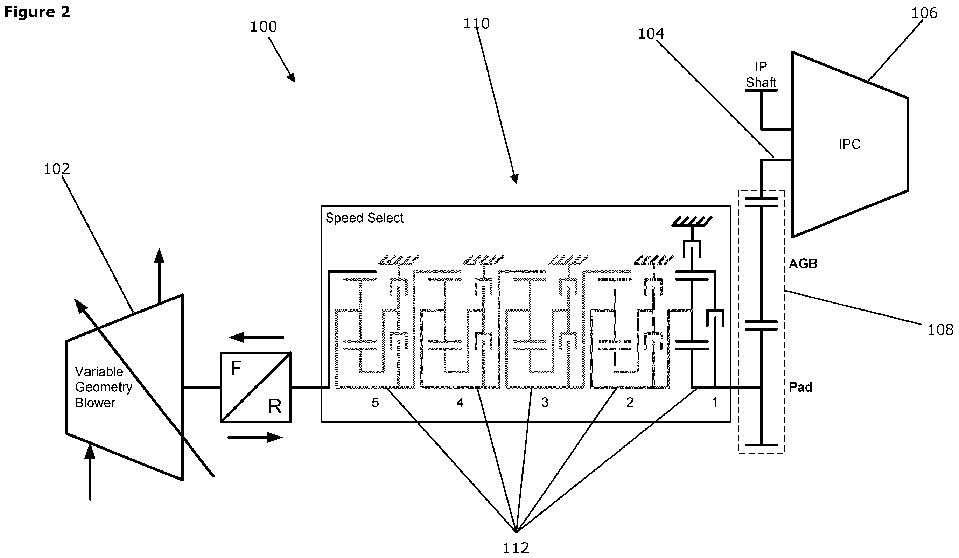

Referring now to Figure 2, a first embodiment of an aircraft cabin blower system 100 is depicted in schematic form. The cabin blower system 100 includes a cabin blower compressor 102 and a power source in the form on an intermediate-pressure shaft 104 of an intermediate-pressure compressor 106 of a gas turbine engine. The intermediate-pressure compressor 106 powers an accessory gearbox 108 of the gas turbine engine, which, in turn, provides power to a transmission 110 of the cabin blower system 100.

The transmission 110 comprises a plurality of gears 112 configured to be selectively-engageable to output one of a plurality of fixed gear ratios. In the present embodiment, five gear ratios are selectable, although a greater or lesser number of gear ratios may be enabled through the use of a differently-configured transmission 110. The transmission 110 takes an input from the accessory gearbox 108 and delivers an output to the cabin blower compressor 102, thus driving the cabin blower compressor 102 at a speed dependent on the output speed of the intermediate-pressure compressor 106 and the gear ratios of the accessory gearbox 108 and the transmission 110.

The cabin blower compressor 102 is a variable geometry compressor and is therefore capable of adjusting its flow output in addition to the difference in output enabled by the variation in the speed of the input from the transmission 110. As such, the variable geometry can be used to 'trim', or make modification to, the output of the cabin blower compressor 102 in order to meet output requirements of the aircraft, enhancing performance.

The use of a variable transmission 110 and a variable geometry cabin blower compressor 102 can therefore result in an output of the cabin blower compressor 102 that can be selected irrespective of the output of the gas turbine engine and without the use of a variator that can result in increased complexity of the transmission 110. Variation of the transmission 110 and geometry can allow greater variation of flow and pressure, both of which can be selected to increase the overall efficiency of the cabin blower system 100, in accordance with known principles. The cabin blower compressor 102 may also be smaller than those used in other systems, whilst delivering the same output.

A smaller cabin blower compressor may be enabled compared to known systems as there is no requirement to have a fixed relationship between engine speed and blower speed. In known systems there is a fixed relationship between engine speed and blower speed and fixed compressor geometry. Hence, the cabin blower compressor is 'oversized', in order to provide high output at lower engine speeds, as well as to provide sufficient stall margin for the compressor at minimum flows. These limitations are removed by the present disclosure.

In addition to operation in the blower mode whereby the gas turbine engine drives the cabin blower compressor 102, as described above, the cabin blower system 100 can be operated in a starter mode in order to provide mechanical input to the gas turbine engine to facilitate a start operation of the gas turbine engine. The cabin blower compressor 102 can operate in reverse as an expander to provide drive to the transmission 110 from a supply of compressed air.

The transmission 110 then transmits the mechanical power from the compressor 102 to the accessory gearbox 108. The accessory gearbox 108 will in turn cause the intermediate-pressure compressor 106 to rotate, which facilitates starting of the gas turbine engine. The remaining steps required for the successful ignition of a gas turbine engine will be known to the person skilled in the art and are therefore not discussed in the present application.

It will be apparent that the variable geometry of the compressor 102 and the variable gear ratio of the transmission 110 can be manipulated such that, when being used in the starter mode, a rotation of the gas turbine engine that is suitable for starting of the gas turbine engine can be selected and maintained. In the same way as a speed of the gas turbine engine can be adapted by use of the transmission 110 and cabin blower compressor 102 to provide a desired output of the cabin blower compressor 102, a speed of rotation of the gas turbine engine can be adapted by variation of the cabin blower compressor 102 and transmission 110 from a set input provided by the compressed air flowing into the compressor 102.

A forward/reverse F/R function is included such that the transmission and engine can be maintained in the 'forward' direction even as the cabin blower compressor 102 is run in reverse as a turbine during operation as a starter.

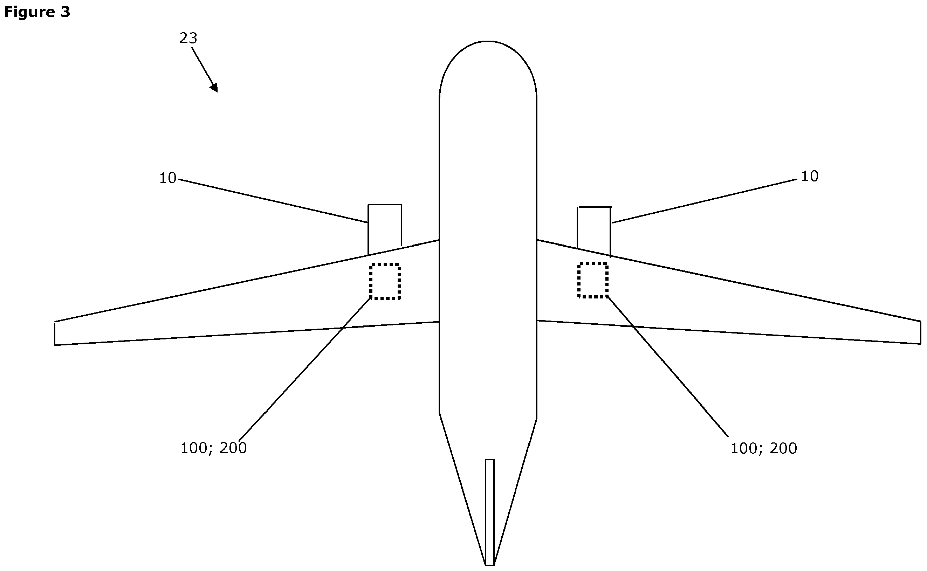

Depicted in Figure 3 is an aircraft 23 including two gas turbine engines 10 and two associated cabin blower systems 100, 200.

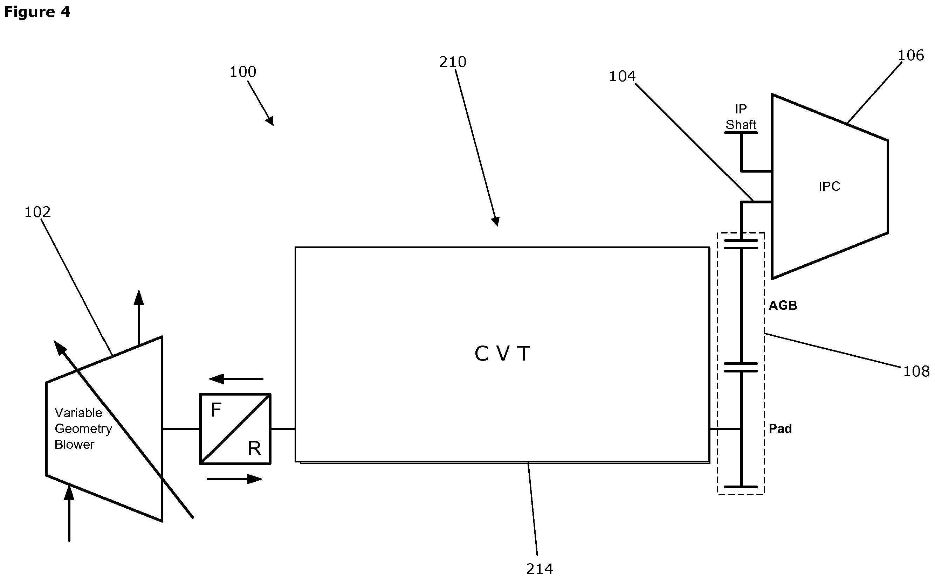

Another cabin blower system 200 is shown in Figure 4. The cabin blower system 200 of Figure 4 can be considered a variation on the cabin blower system 100 of Figure 2. Here, identical reference numerals have been used to signify identical parts, and further explanation of these parts, which operate in the same way as described previously, is omitted for brevity.

The difference between the cabin blower system 100 of Figure 2 and the cabin blower system 200 of Figure 4 is that a transmission 210 includes a continuously variable transmission 214. The continuously variable transmission 214 therefore enables any gear ratio within a predetermined range of gear ratios to be selected. This may be controlled automatically by the transmission 210 or may be selected manually by a user, each of these options being known to the person skilled in the art and not therefore requiring any further specific description.

The use of a continuously variable transmission 210 with a variable geometry cabin blower compressor 102 may enable the relationship between the two to be selected through their variation so as to provide enhanced efficiency in the system 200.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. An aircraft cabin blower system (100) comprising:
a transmission (110) for receiving mechanical power from a gas turbine engine (10); and
a cabin blower compressor (102), an output of the transmission (110) being configured to drive the cabin blower compressor (102);
wherein the transmission (110) has a variable gear ratio and the cabin blower compressor (102) has a variable geometry, and wherein variation of the gear ratio and the geometry provides a variable output of the cabin blower compressor (102); **characterised in that** the transmission (110) includes a plurality of fixed gears (112), selectively engageable to provide a plurality of discrete gear ratios.

2. The aircraft cabin blower system (100) according to claim 1, the transmission (110) being configured to receive mechanical power from an accessory gearbox (108) of the gas turbine engine (10).

3. The aircraft cabin blower system (100) according to claim 2, wherein the accessory gearbox (108) is driven by an intermediate-pressure shaft (106) or a high-pressure shaft of the gas turbine engine (10).

4. The aircraft cabin blower system (100) according to any preceding claim, wherein the transmission (110) and the cabin blower compressor (102) are capable of being configured in a starter mode to provide mechanical power to the gas turbine engine (10) to facilitate starting of the gas turbine engine (10).

5. An aircraft (23) comprising an aircraft cabin blower system (100) according to any preceding claim.

6. A method of operating an aircraft cabin blower system (100), the method comprising the steps of:
varying a gear ratio of a transmission (110) of the cabin blower system (100) that provides mechanical power from a gas turbine engine (10) to a cabin blower compressor (102) of the cabin blower system (100); and
varying a geometry of the cabin blower compressor (102); wherein varying the gear ratio of the transmission (110; 210) and varying the geometry of the cabin blower compressor (102) provide a desired output of the cabin blower compressor (102), **characterised in that** the step of varying the gear ratio comprises selecting a discrete gear ratio from a plurality of discrete gear ratios of the transmission (110).

7. The method according to any of claims 6, further comprising the step of transmitting power from an accessory gearbox (108) of the gas turbine engine (10) to the transmission (110).

8. The method according to claim 6 or claim 7, further comprising the steps of:
in a starter mode,
operating the transmission (110) and cabin blower compressor (102) to provide mechanical power to the gas turbine engine (10) to facilitate starting of the gas turbine engine (10).

## Patentansprüche

1. Flugzeugkabinengebläsesystem (100), umfassend:
ein Getriebe (110) zum Empfangen mechanischer Leistung von einem Gasturbinentriebwerk (10); und
einen Kabinengebläsekompressor (102), wobei eine Ausgabe des Getriebes (110) konfiguriert ist, um den Kabinengebläsekompressor (102) anzutreiben;
wobei das Getriebe (110) ein variables Übersetzungsverhältnis aufweist und der Kabinengebläsekompressor (102) eine variable Geometrie aufweist und wobei eine Variation des Übersetzungsverhältnisses und der Geometrie eine variable Ausgabe des Kabinengebläsekompressors (102) bereitstellt; **dadurch gekennzeichnet, dass** das Getriebe (110) mehrere feste Zahnräder (112) enthält, die selektiv in Eingriff gebracht werden können, um mehrere diskrete Übersetzungsverhältnisse bereitzustellen.

2. Flugzeugkabinengebläsesystem (100) nach Anspruch 1, wobei das Getriebe (110) konfiguriert ist, um mechanische Leistung von einem Zubehörgetriebe (108) des Gasturbinentriebwerks (10) zu empfangen.

3. Flugzeugkabinengebläsesystem (100) nach Anspruch 2, wobei das Zubehörgetriebe (108) von einer Mitteldruckwelle (106) oder einer Hochdruckwelle des Gasturbinentriebwerks (10) angetrieben wird.

4. Flugzeugkabinengebläsesystem (100) nach einem vorhergehenden Anspruch, wobei das Getriebe (110) und der Kabinengebläsekompressor (102) in einem Startermodus konfiguriert werden können, um das Gasturbinentriebwerk (10) mit mechanischer Leistung zu versorgen, um das Starten des Gasturbinentriebwerks (10) zu erleichtern.

5. Flugzeug (23), umfassend ein Flugzeugkabinengebläsesystem (100) nach einem vorhergehenden Anspruch.

6. Verfahren zum Betreiben eines Flugzeugkabinengebläsesystems (100), wobei das Verfahren die Schritte umfasst:
Variieren eines Übersetzungsverhältnisses eines Getriebes (110) des Kabinengebläsesystems (100), das einen Kabinengebläsekompressor (102) des Kabinengebläsesystems (100) mit mechanischer Leistung von einem Gasturbinentriebwerk (10) versorgt; und
Variieren einer Geometrie des Kabinengebläsekompressors (102);
wobei das Variieren des Übersetzungsverhältnisses des Getriebes (110; 210) und das Variieren der Geometrie des Kabinengebläsekompressors (102) eine gewünschte Ausgabe des Kabinengebläsekompressors (102) bereitstellen, **dadurch gekennzeichnet, dass** der Schritt des Variierens des Übersetzungsverhältnisses das Auswählen eines diskreten Übersetzungsverhältnisses aus mehreren diskreten Übersetzungsverhältnissen des Getriebes (110) umfasst.

7. Verfahren nach einem der Ansprüche 6, ferner umfassend den Schritt des Übertragens von Leistung von einem Zubehörgetriebe (108) des Gasturbinentriebwerks (10) auf das Getriebe (110).

8. Verfahren nach Anspruch 6 oder 7, ferner umfassend die Schritte: in einem Startermodus Betreiben des Getriebes (110) und des Kabinengebläsekompressors (102), um das Gasturbinentriebwerk (10) mit mechanischer Leistung zu versorgen, um das Starten des Gasturbinentriebwerks (10) zu erleichtern.

## Revendications

1. Système de ventilateur (100) de cabine d'aéronef comprenant :
une transmission (110) destinée à recevoir de l'énergie mécanique en provenance d'un moteur à turbine à gaz (10) ; et
un compresseur (102) de ventilateur de cabine, une sortie de la transmission (110) étant conçue pour entraîner le compresseur (102) de ventilateur de cabine ;
ladite transmission (110) possédant un rapport d'engrenage variable et ledit compresseur (102) de ventilateur de cabine possédant une géométrie variable, et ladite variation du rapport de vitesses et de la géométrie fournissant une sortie variable du compresseur (102) de ventilateur de cabine ; **caractérisé en ce que** la transmission (110) comprend une pluralité d'engrenages fixes (112), pouvant se mettre en prise sélectivement pour fournir une pluralité de rapports de vitesses distincts.

2. Système de ventilateur (100) de cabine d'aéronef selon la revendication 1, la transmission (110) étant conçue pour recevoir de l'énergie mécanique en provenance d'une boîte de vitesses d'accessoires (108) du moteur à turbine à gaz (10).

3. Système de ventilateur (100) de cabine d'aéronef selon la revendication 2, ladite boîte de vitesses d'accessoires (108) étant entraînée par un arbre de pression intermédiaire (106) ou un arbre haute pression du moteur à turbine à gaz (10).

4. Système de ventilateur (100) de cabine d'aéronef selon l'une quelconque des revendications précédentes, ladite transmission (110) et ledit compresseur (102) de ventilateur de cabine pouvant être conçus dans un mode démarreur pour fournir une énergie mécanique au moteur à turbine à gaz (10) pour faciliter le démarrage du moteur à turbine à gaz (10).

5. Aéronef (23) comprenant un système de ventilateur (100) de cabine d'aéronef selon l'une quelconque des revendications précédentes.

6. Procédé de fonctionnement d'un système de ventilateur (100) de cabine d'aéronef, le procédé comprenant les étapes de :
variation d'un rapport de vitesses d'une transmission (110) du système de ventilateur (100) de cabine qui fournit une énergie mécanique provenant d'un moteur à turbine à gaz (10) à un compresseur (102) de ventilateur de cabine du système de ventilateur (100) de cabine ; et
variation d'une géométrie du compresseur (102) de ventilateur de cabine ;
ladite variation du rapport de vitesses de la transmission (110; 210) et ladite variation de la géométrie du compresseur (102) de ventilateur de cabine fournissant une sortie souhaitée du compresseur (102) de ventilateur de cabine, **caractérisée en ce que** l'étape de variation du rapport de vitesses comprend la sélection d'un rapport de vitesses distinct à partir d'une pluralité de rapports de vitesses distincts de la transmission (110).

7. Procédé selon l'une quelconque des revendications 6, comprenant en outre l'étape de transmission d'énergie à partir d'une boîte de vitesses d'accessoires (108) du moteur à turbine à gaz (10) à la transmission (110).

8. Procédé selon la revendication 6 ou 7, comprenant en outre les étapes de : dans un mode démarreur, fonctionnement de la transmission (110) et du compresseur (102) de ventilateur de cabine pour fournir une énergie mécanique au moteur à turbine à gaz (10) pour faciliter le démarrage du moteur à turbine à gaz (10).
